Europäisches Patentamt

European Patent Office

Office européen des brevets

(11) Veröffentlichungsnummer: **0 222 987**
**B1**

# EUROPÄISCHE PATENTSCHRIFT

(45) Veröffentlichungstag der Patentschrift:
12.09.90

(51) Int. Cl.⁵: **F02M 35/04, F02M 69/00**

(21) Anmeldenummer: 86111614.3

(22) Anmeldetag: 22.08.86

(54) **Anordnung mit einem Luftmassenmesser für eine Brennkraftmaschine.**

(30) Priorität: 02.11.85 DE 3539013

(43) Veröffentlichungstag der Anmeldung:
27.05.87 Patentblatt 87/22

(45) Bekanntmachung des Hinweises auf die Patenterteilung:
12.09.90 Patentblatt 90/37

(84) Benannte Vertragsstaaten:
DE FR GB SE

(56) Entgegenhaltungen:
EP-A- 0 095 516
DE-A- 3 025 431
DE-A- 3 338 653
GB-A- 2 122 254

(73) Patentinhaber: VDO Adolf Schindling AG,
Gräfstrasse 103, D-6000 Frankfurt/Main 90(DE)

(72) Erfinder: Hannewald, Thomas, Feldmannstrasse 6,
D-6103 Griesheim(DE)
Erfinder: Weingärtner, Reiner,
Wilhelm-Leuschner-Strasse 9, D-6238 Hofheim a. T.(DE)
Erfinder: Kern, Eckhart, Hofheimer Strasse 35,
D-6238 Hofheim a. T. 7(DE)
Erfinder: Weibler, Wolfgang, Dr., Vor der Heide 14,
D-6238 Hofheim a. T.(DE)
Erfinder: Porth, Wolfgang, Röhrborngasse 70,
D-6000 Frankfurt am Main 60(DE)

(74) Vertreter: Klein, Thomas, Dipl.-Ing. (FH), Sodener
Strasse 9 Postfach 6140, D-6231 Schwalbach a. Ts.(DE)

ACTORUM AG

## Beschreibung

Die Erfindung betrifft eine Anordnung mit einem Luftmassenmesser für eine Brennkraftmaschine, wobei die Meßstelle des Luftmassenmessers in einem Meßrohr angeordnet ist, das als Strömungskanal ausgebildet ist, der einen gebogenen und einen geraden Abschnitt aufweist und den Innenraum eines Luftfilters mit einem mit der Ansaugöffnung der Brennkraftmaschine verbundenen Hohlraum verbindet, wobei die Meßstelle im geraden Teil des Strömungskanals liegt und der Innenraum des Luftfilters und der Hohlraum jeweils im wesentlichen die Form eines flachen Zylinders aufweisen.

Bei der Regelung von Brennkraftmaschinen mit Kraftstoffeinspritzung ist die Messung der vom Motor angesaugten Luftmasse erforderlich. Hierzu sind mechanische Systeme bekannt, welche beispielsweise mit in den Luftstrom hineinragenden beweglichen Klappen oder Stauscheiben arbeiten. Außerdem sind zur Luftmassenmessung Sensoren bekannt geworden, zum Beispiel Hitzdraht-Luftmassenmesser. Diese haben den Vorteil, daß sie keine bewegten Teile aufweisen und gegenüber den mechanischen Systemen einen geringen Eingriff in die Luftströmung zur Folge haben. Außerdem ist das Meßergebnis unabhängig von Höhenunterschieden, was bei den mechanischen Systemen, welche primär die Luftmenge messen, nicht der Fall ist.

Bei der Anordnung der Luftmassen- bzw. Luftmengenmesser wurden verschiedene Wege beschritten. So ist es beispielsweise bekannt geworden, einen mit Ultraschall arbeitenden Luftmassenmesser mit einem Luftfilter konstruktiv zu verbinden. Dabei ist die Meßstelle des Luftmassenmessers innerhalb eines zum Luftfilter konzentrisch angeordneten kurzen Meßrohres vorgesehen. Wegen der geringen Länge des Meßrohres bilden sich jedoch nur in Grenzen geeignete Strömungsverhältnisse an der Meßstelle aus, die bei den unterschiedlichen Betriebsbedingungen und gleichem Massenstrom weitgehend gleich sind, so daß die Genauigkeit des Meßergebnisses nicht allen Anforderungen genügt.

Eine Anordnung der eingangs genannnten Art ist aus der DE-A 3 025 431 bekannt. Der Aufbau dieser Anordnung ist sehr bauarm- und montageaufwendig, da sich das Meßrohr radial von dem Hohlraum wegerstreckt.

Aufgabe der vorliegenden Erfindung ist es daher, eine Anordnung mit einem Luftmassenmesser anzugeben, bei welchem innerhalb des Meßrohres geeignete Strömungsverhältnisse gewährleistet sind und somit genauere Meßergebnisse erzielt werden. Dabei soll die Anordnung mit dem Luftmassenmesser preiswert herzustellen sein, zuverlässig arbeiten und sich bezüglich des Platzbedarfs sowie der Wartungsfreundlichkeit für den Anbau an eine Brennkraftmaschine, insbesondere eines Kraftfahrzeuges, eignen.

Diese Aufgabe wird erfindungsgemäß dadurch gelöst, daß der Hohlraum von einem Gehäuse umschlossen ist, auf welches eine den Innenraum des Luftfilters und den Hohlraum trennende Trennwand und der Luftfilter aufsetzbar sind, daß ein erster gebogener Abschnitt des Strömungskanals mit einer die Eintrittsöffnung des Strömungskanals bildenden Öffnung mit der Trennwand verbunden ist, daß sich an den ersten gebogenen Abschnitt des Strömungskanals ein gerader, mindestens teilweise im Hohlraum verlaufender Abschnitt anschließt und daß nach dem geraden Abschnitt ein zweiter gebogener Abschnitt angeordnet ist, welcher in den Hohlraum mündet.

Durch die erfindungsgemäße Anordung werden geeignete Strömungsverhältnisse an der Meßstelle und damit ein genaues Meßergebnis erreicht. Dabei weist die erfindungsgemäße Anordnung eine kompakte, wenig Platz beanspruchende Bauform auf.

Eine besonders kompakte Konstruktion wird dadurch erreicht, daß in dem Hohlraum ein Kraftstoffeinspritzventil angeordnet ist, dessen Düse einem zur Brennkraftmaschine führenden, eine Drosselklappe enthaltenden Rohr gegenübersteht.

Um zu vermeiden, daß Teile des eingespritzten Kraftstoffnebels nicht direkt in den Ansaugkanal des Motors, sondern zunächst in den Hohlraum gelangen, kann gemäß einer anderen Weiterbildung das zur Brennkraftmaschine führende Rohr trichterförmig in den Hohlraum hineinragen.

Zur besseren Leitung der Luft innerhalb des Hohlraums können im Bereich der Düse Leitelemente angeordnet sein.

Andere Weiterbildungen der Erfindung sehen eine strömungstechnisch günstige Gestaltung des Strömungskanals vor, nämlich derart, daß die Fläche der Eintrittsöffnung größer als die Querschnittsfläche des Strömungskanals ist, daß im Bereich der Eintrittsöffnung der Strömungskanal in einer Ebene verläuft, welche die Trennwand unter einem spitzen Winkel schneidet und/oder daß der Strömungskanal in der Nähe der Eintrittsöffnung einen Strömungsgleichrichter und/oder in der Nähe der Austrittsöffnung ein Schutzgitter enthält. Auch kann der Durchmesser des Strömungskanals zur Verbesserung der Strömung in der Nähe des Sensors an der Meßstelle kleiner als an der Eintrittsöffnung sein.

Wenn die Erfindung auch in erster Linie auf die Verwendung von thermischen Sensoren, beispielsweise Hitzdraht-Sensoren, gerichtet ist, so ist eine vorteilhafte Anwendung anderer Sensoren, beispielsweise Ultraschall-Sensoren, durchaus möglich.

Zum Betrieb der in Frage kommenden Sensoren sind elektrische Schaltungen erforderlich, welche zweckmäßigerweise in der Nähe des Sensors angeordnet sind. Gemäß Weiterbildungen der Erfindung ist die dem Sensor zugeordnete elektrische Schaltung in der Nähe des Sensors auf der Trennwand angeordnet. Die erforderliche Kühlung der elektrischen Schaltung kann entweder durch die gefilterte Ansaugluft erfolgen oder dadurch, daß die Trennwand als Kühlkörper dient, wenn gemäß einer weiteren Ausgestaltung der Erfindung die elektrische Schaltung mit der Trennwand in wärmeleitender Verbindung steht.

Schließlich ist es möglich, weitere elektrische Schaltungen, beispielsweise eine die Signale des Luftmassenmessers und möglicherweise anderer Sensoren auswertende Regelschaltung in Innenraum des Luftfilters auf der Trennwand anzuordnen. Hierbei entstehen neben dem Vorteil der Kühlung auch ein weiterer Vorteil, daß nämlich verschiedenene Elemente, welche zu einem Regelsystem gehören und somit funktionell zusammenhängen, auch körperlich innerhalb einer Baueinheit angeordnet sind.

·Ähnliche Anordnungen sind in den prioritätsgleichen Anmeldungen EP-A 0 221 268 und EP-A 0 221 267 enthalten.

Die Erfindung läßt zahlreiche Ausführungsformen zu. Eine davon ist schematisch in der Zeichnung an Hand mehrerer Figuren dargestellt und nachfolgend beschrieben. Es zeigt:

Fig. 1 einen Querschnitt und
Fig. 2 einen Längsschnitt des Ausführungsbeispiels.

Gleiche Teile sind in den Figuren mit gleichen Bezugszeichen versehen.

Das Luftfilter 1 mit einem Gehäuse 2 ist ein an sich bekanntes die Form eines flachen Zylinders aufweisendes Luftfilter, wie es für die weitaus meisten Vergasermotoren verwendet wird. Anstelle eines Rohranschlusses für den Ansaugstutzen ist es jedoch unten offen. Es wird jedoch von einer Trennwand 7, welche den Filterinnenraum 4 von dem darunter liegenden, im folgenden näher beschriebenen Hohlraum trennt, verschlossen. Mit 3 ist in der Figur das eigentliche, lediglich schematisch dargestellte ringförmige Luftfilter bezeichnet.

. Das Gehäuse 5, welches das Luftfilter 1 und die Trennwand 7 trägt, ist mit einem Rohr 10 verbunden, welches den Ansaugkanal der nicht dargestellten Brennkraftmaschine bildet. In dem Rohr 10 ist die Drosselklappe 11 angeordnet. Ein oberhalb der Eintrittsöffnung des Rohres 10 angeordnetes Einspritzventil 8 spritzt den Kraftstoff in die Luft, welche unmittelbar in das Rohr 10 eintritt. Damit ein Teil der von der Düse 9 versprühten Kraftstoffteilchen nicht in Bereiche der Luft gelangen, welche nicht direkt in das Rohr 10 strömt, kann eine trichterförmige Erweiterung 12 des Rohres 10 vorgesehen sein. Leitelemente 13 tragen dazu bei, die Strömung im Raum vor der Düse 9 zu beruhigen und gleichmäßig zu verteilen.

Der Übersichtlichkeit halber ist eine Halterung des Einspritzventils innerhalb des Gehäuses 5 nicht dargestellt. Der Entwurf einer solchen Halterung liegt jedoch im Bereich des Fachmännischen.

Das Einspritzventil 8 kann mit einem Systemdruckregler 21, welcher als solcher bekannt ist, zu einer konstruktiven Einheit zusammengefaßt sein. Leitungen für die Kraftstoffzu- und Rückführung sind vorgesehen, jedoch nicht dargestellt.

Der Hohlraum 6 des Gehäuses 5 bildet einen Pulsations-Dämpfungsraum. Bekanntlich erfolgt das Ansaugen bei mit Kolben arbeitenden Brennkraftmaschinen pulsierend. Diese Pulsation macht sich im gesamten Ansaugsystem bemerkbar. Für eine exakte Messung der Luftmassen ist jedoch eine gleichmäßige Strömung im Luftmassenmesser erforderlich; die Pulsation verfälscht somit das Meßergebnis.

Die Trennwand 7 weist eine Öffnung auf, durch welche die Eintrittsöffnung 17 des Strömungskanals 14 in den Innenraum 4 des Luftfilters 1 hineinragt.

Der Rand der Eintrittsöffnung 17 läuft zur Verbesserung der Strömungsverhältnisse kragenförmig aus. Der Strömungskanal 14 durchdringt die Trennwand 7 schräg, wodurch eine Vergrößerung der Eintrittsöffnung 17 erreicht wird, was ebenfalls zur Verbesserung der Strömungsverhältnisse beiträgt.

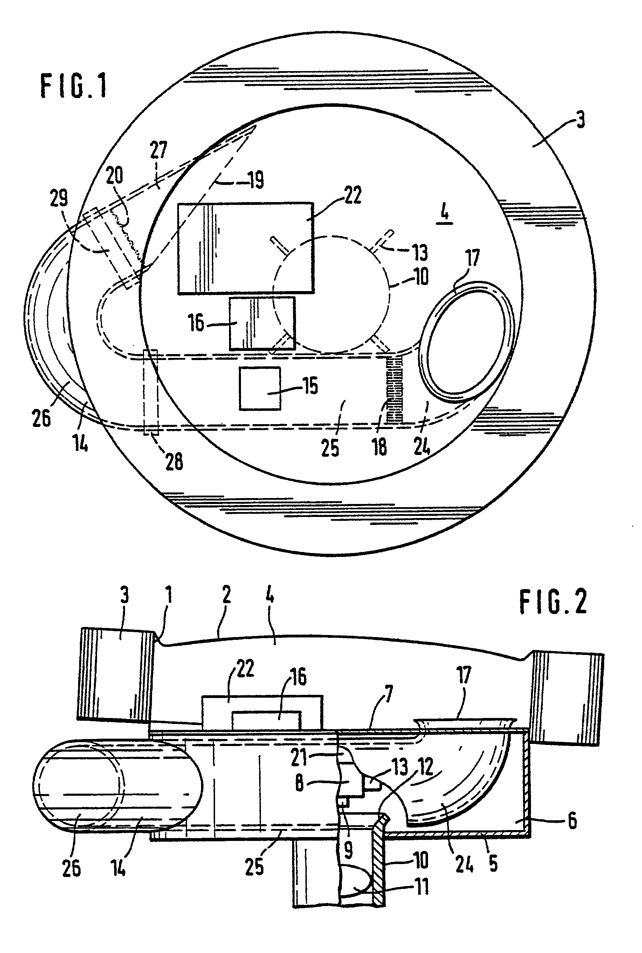

Je nach Erfordernissen im Einzelfall, kann der Strömungskanal jeweils zu einer oberen und unteren Hälfte einstückig mit der Trennwand 7 und dem Gehäuse 5 hergestellt werden. Es kann jedoch auch zweckmäßig sein, den Strömungskanal entsprechend den oben erwähnten Abschnitten in Einzelteilen herzustellen und zusammenzusetzen. So ist beispielsweise in Fig. 1 zwischen den Abschnitten 25 und 26 sowie 26 und 27 je eine Trennstelle vorgesehen, während die Abschnitte 25 und 26 aus einem Stück bestehen. In Fig. 2 wurde von einem einstückigen Strömungskanal ausgegangen.

In der Nähe der Austrittsöffnung 19 ist ein Schutzgitter 20 vorgesehen, während an der Eintrittsöffnung 17 ein Strömungsgleichrichter 18 angeordnet ist, welcher in an sich bekannter Weise aus einer Vielzahl von in einen geeigneten Werkstoff eingebrachten Kanälen besteht.

Der Strömungskanal 14 kann im Bereich des Sensors 15 eine kleinere Querschnittsfläche als im übrigen Bereich aufweisen, wobei die Übergänge allmählich erfolgen. Um Ablagerungen von Verunreinigungen auf dem Sensor 15 zu vermeiden, kann in an sich bekannter Weise vor dem Sensor 15 ein zum Sensor 15 paralleler stabförmiger Körper angeordnet sein.

Wie bereits oben erwähnt, können bei der erfindungsgemäßen Anordnung verschiedenartige Sensoren verwendet werden. Eine bevorzugte Ausführung des Sensors 15 besteht in einem thermischen Sensor, bei welchem ein im Strömungskanal gespannter Draht oder ein auf einem Isolierstoffplättchen aufgebrachte Leiter von einem Strom durchflossen wird, so daß sie sich deutlich über die Temperatur der vorbeiströmenden Luft hinaus erwärmen. Über den temperaturabhängigen Widerstand kann in einer elektrischen Schaltung 16 die Temperatur des Leiters auf einen konstanten Wert geregelt werden, wobei je nach vorbeiströmender Luftmasse ein höherer oder niedrigerer Strom durch den Leiter fließt. Zur Kompensation des Einflusses der Lufttemperatur kann in der Nähe des elektrisch beheizten Meßleiters ein Vergleichsleiter angeordnet sein, welcher nur von einem geringen Strom durchflossen ist, so daß seine Temperatur praktisch der Temperatur der Luft entspricht.

Wegen der elektrischen Verbindungen des Sensors 15 mit der zugehörigen elektrischen Schaltung 16 ist diese in unmittelbarer Nähe des Sensors 15 angeordnet. Dabei hat es sich als besonders günstig herausgestellt, die elektrische Schaltung 16 im Innenraum des Luftfilters vorzusehen und an der Trennwand 7 zu befestigen. Dabei dient die durch das Filter 3 angesaugte Luft der Kühlung der elektrischen Schaltung 16, wobei bei gutem Wärmekontakt zwischen der Schaltung 16 und der Trennwand 17 die wirksame Kühlfläche, welche in der Lage ist, Wärme an die Luft abzugeben, erheblich vergrößert wird.

Außer der elektrischen Schaltung 16 kann im Innenraum 4 des Luftfilter 1 eine weitere mit der Schaltung 16 in Verbindung stehende Schaltung 22 angeordnet sein. Die Schaltung 22 enthält die an sich bekannte zur elektronischen Einspritzregelung erforderlichen Schaltungen. Durch die Anordnung der weiteren Schaltung 22 in diesem Bereich auf der Trennwand 7 wird neben einer guten Kühlung auch erreicht, daß sich die Leitungsführung zwischen der Schaltung 16 und der Schaltung 22 sowie dem Einspritzventil 8 erheblich vereinfacht. Ferner ist es für Wartungsarbeiten günstig, daß die genannten drei Komponenten des Einspritzregelsystems innerhalb einer Baugruppe angeordnet sind.

**Patentansprüche**

1. Anordnung mit einem Luftmassenmesser für eine Brennkraftmaschine, wobei die Meßstelle des Luftmassenmessers in einem Meßrohr angeordnet ist, das als Strömungskanal ausgebildet ist, der einen gebogenen und einen geraden Abschnitt aufweist und den Innenraum (4) eines Luftfilters (1) mit einem mit der Ansaugöffnung der Brennkraftmaschine verbundenen Hohlraum (6) verbindet, wobei die Meßstelle im geraden Teil des Strömungskanals liegt und der Innenraum (4) des Luftfilters (1) und der Hohlraum (6) jeweils im wesentlichen die Form eines flachen Zylinders aufweisen, dadurch gekennzeichnet, daß der Hohlraum (6) von einem Gehäuse (5) mit einer Seitenwand und einem Boden umschlossen ist, von dessen Gehäuseboden ein mit der Brennkraftmaschine verbundenes Ansaugrohr (10) ausgeht, daß auf das Gehäuse eine den Innenraum (4) des Luftfilters (1) und den Hohlraum trennende Trennwand (7) und der Luftfilter (1) aufgesetzt sind, daß ein erster gebogener Abschnitt (24) des rohrförmigen Strömungskanals (14) mit einer die Eintrittsöffnung (17) des Strömungskanals (14) bildenden Öffnung mit der Trennwand verbunden ist, und mit der Eintrittsöffnung durch die Trennwand geführt ist, daß sich an den ersten gebogenen Abschnitt (24) des rohrförmigen Strömungskanals (14) ein gerader, mindestens teilweise im Hohlraum (6) verlaufender Abschnitt (25) anschließt und daß nach dem geraden Abschnitt (25) ein zweiter gebogener Abschnitt (26) angeordnet ist, welcher in den Hohlraum (6) mündet.

2. Anordnung nach Anspruch 1, dadurch gekennzeichnet, daß dem zweiten gebogenen Abschnitt (26) ein weiterer gerader Abschnitt (27) nachgeordnet ist, welcher im wesentlichen tangential in den Hohlraum (6) mündet.

3. Anordnung nach Anspruch 1 oder 2, dadurch gekennzeichnet, daß der in den Hohlraum mündende Abschnitt (26, 27) eine Austrittsöffnung (19) aufweist, deren Ebene einen spitzen Winkel zur Achse des Abschnitts (26, 27) an der Austrittsöffnung (17) bildet.

4. Anordnung nach Anspruch 1, dadurch gekennzeichnet, daß die Eintrittsöffnung (17) des Strömungskanals (14) aus der Trennwand (7) herausragt und kragenförmig ausläuft.

5. Anordnung nach Anspruch 1, dadurch gekennzeichnet, daß in dem Hohlraum (6) ein Kraftstoffeinspritzventil (8) angeordnet ist, dessen Düse (9) dem zur Brennkraftmaschine führenden, eine Drosselklappe (11) enthaltendem Rohr (10) gegenübersteht.

6. Anordnung nach Anspruch 5, dadurch gekennzeichnet, daß das Rohr (10) trichterförmig in den Hohlraum (6) hineinragt.

7. Anordnung nach Anspruch 5, dadurch gekennzeichnet, daß im Bereich der Düse (9) Leitelemente (13) angeordnet sind.

8. Anordnung nach Anspruch 5, dadurch gekennzeichnet, daß das Kraftstoffeinspritzventil (8) und das Rohr (10) asymmetrisch angeordnet sind.

9. Anordnung nach Anspruch 1, dadurch gekennzeichnet, daß der Strömungskanal (14) in der Nähe der Eintrittsöffnung (17) einen Strömungsgleichrichter (18) enthält.

10. Anordnung nach Anspruch 1, dadurch gekennzeichnet, daß der Strömungskanal (14) in der Nähe der Austrittsöffnung (19) ein Schutzgitter (20) enthält.

11. Anordnung nach Anspruch 1, dadurch gekennzeichnet, daß der Strömungskanal (14) als Venturi-Düse ausgebildet ist, in derem engsten Querschnitt die Meßstelle (15) vorgesehen ist.

12. Anordnung nach Anspruch 1, dadurch gekennzeichnet, daß an der Meßstelle ein thermischer Sensor (15) angeordnet ist.

13. Anordnung nach Anspruch 12, dadurch gekennzeichnet, daß eine dem Sensor (15) zugeordnete elektrische Schaltung (16) in der Nähe der Meßstelle (14) auf der Trennwand (7) angeordnet ist.

14. Anordnung nach Anspruch 12, dadurch gekennzeichnet, daß die elektrische Schaltung (16) mit der Trennwand (7) in wärmeleitender Verbindung steht.

15. Anordnung nach Anspruch 13, dadurch gekennzeichnet, daß auf der Trennwand (7) weitere elektrische Schaltungen (22) angeordnet sind.

**Claims**

1. Arrangement with an air mass meter for an internal combustion engine, the measuring zone of the air mass meter being situated in a measuring tube which is constructed as a flow duct which has a curved portion and a straight portion and which connects the interior space (4) of an air filter (1) to a chamber (6) connected to the suction inlet aperture of the internal combustion engine, the measuring zone being situated in the straight portion of the flow duct, and the interior space (4) of the air filter (1) and also the chamber (6) are each substantially in the form of a flat cylinder, characterised in that the chamber (6) is surrounded by a housing (5) having a side wall and a bottom, a suction inlet tube (10) connected to the internal combustion engine starting from the said housing bottom, that the air filter (1) and a partition wall (7) separating the interior space (4) of the air filter (1) and the chamber (6) are mounted on the housing. that a first curved portion (24) of the tubular flow duct (14) is connected to the partition wall via an aperture forming the inlet aperture (17) of the flow duct (14) and extends with the inlet aperture through the partition wall, that the first curved portion (24) of the tubular flow duct (14) is followed by a straight portion (25) disposed at least partly in the chamber (6), and that after the straight portion (25) a second curved portion (26) is arranged which opens into the chamber (6).

2. Arrangement according to claim 1, characterised in that a further straight portion (27) which opens substantially tangentially into the chamber (6) is arranged downstream of the second curved portion (26).

3. Arrangement according to claim 1 or 2, characterised in that the portion (26, 27) opening into the chamber has an outlet aperture (19) the plane of which is at an acute angle to the axis of the portion (26, 27) at the outlet aperture (17).

4. Arrangement according to claim 1, characterised in that the inlet aperture (17) of the flow duct (14) projects out of the partition wall (7) and terminates in the shape of a collar.

5. Arrangement according to claim 1, characterised in that a fuel injection valve (8) is arranged in the chamber (6), with its nozzle (9) situated opposite the tube (10) which leads to the internal combustion engine and which contains a pivotable throttle valve (11).

6. Arrangement according to claim 5, characterised in that the tube (10) projects in funnel form into the chamber (6).

7. Arrangement according to claim 5, characterised in that guide elements (13) are arranged in the region of the nozzle (9).

8. Arrangement according to claim 5, characterised in that the fuelinjection valve (8) and the tube (10) are arranged asymmetrically.

9. Arrangement according to claim 1, characterised in that the flow duct (14) contains a flow rectifier (18) in the vicinity of the inlet aperture (17).

10. Arrangement according to claim 1, characterised in that the flow duct (14) contains a protective grid(20) in the vicinity of the outlet aperture (19).

11. Arrangement according to claim 1, characterised in that the flow duct (14) is constructed as a venturi nozzle, the measuring zone (15) being provided in the narrowest cross-section of the said nozzle.

12. Arrangement according to claim 1, characterised in that a thermal sensor (15) is arranged at the measuring zone.

13. Arrangement according to claim 12, characterised in that an electrical circuit arrangement (16) associated with the sensor (15) is arranged on the partition wall (7) in the vicinity of the measuring zone.

14. Arrangement according to claim 12, characterised in that the electrical circuit (16) is connected in thermally conductive manner to the partition wall (7).

15. Arrangement according to claim 13, characterised in that further electrical circuit arrangements (22) are arranged on the partition wall (7).

## Revendications

1. Agencement comportant un dispositif de mesure de masses d'air pour moteur à combustion interne, le poste de mesure de ce dispositif étant disposé dans un tube qui constitue un canal d'écoulement, comporte un tronçon courbe et un tronçon rectiligne et fait communiquer l'intérieur (4) d'un filtre (1) à air avec une cavité (6) communiquant avec l'orifice d'aspiration du moteur, ce poste de mesure se trouvant dans la partie rectiligne du canal d'écoulement et l'intérieur (4) du filtre (1) à air ainsi que la cavité (6) ayant chacun la forme d'un cylindre aplati, agencement caractérisé en ce que la cavité (6) est entourée par un boîtier (5) qui comporte une paroi latérale et un fond, duquel part un tube (10) d'aspiration relié au moteur; en ce qu'une cloison (7), qui sépare l'espace intérieur (4) du filtre (1) à air de la cavité (6), ainsi que ce filtre (1) sont posés sur ce boîtier; en ce qu'un premier tronçon (24) courbe du canal (14) d'écoulement en forme de tube est relié à la cloison par une ouverture qui forme l'orifice d'entrée (17) de ce canal (14) d'écoulement, cet orifice d'entrée passant au-delà de cette cloison; en ce qu'un tronçon (25) rectiligne qui passe, au moins en partie, dans la cavité (6), fait suite à ce premier tronçon courbe (24) du canal (14) d'écoulement en forme de tube; et en ce qu'un second tronçon (26) courbe, qui débouche dans ladite cavité (6), est disposé après ce tronçon (25) rectiligne.

2. Agencement selon la revendication 1, caractérisé en ce qu'un autre tronçon (27) rectiligne, qui débouche sensiblement tangentiellement dans la cavité (6), est disposé à la suite du second tronçon (26) courbe.

3. Agencement selon la revendication 1 ou 2, caractérisé en ce que le tronçon (26, 27) qui débouche dans la cavité (6) comporte un orifice (19) de sortie, dont le plan fait un angle aigu avec l'axe de ce tronçon (26, 27) à cet orifice (19) de sortie.

4. Agencement selon la revendication 1, caractérisé en ce que l'orifice (17) d'entrée du canal (14) d'écoulement fait saillie de la cloison (7) et est élargi en collerette.

5. Agencement selon la revendication 1, caractérisé en ce que la cavité (6) contient un injecteur (8) de carburant dont le gicleur (9) est vis-à-vis d'un tube (10) qui va au moteur à combustion interne et qui contient un papillon (11) étrangleur.

6. Agencement selon la revendication 5, caractérisé en ce que le tube (10) pénètre dans la cavité (10) et y est évasé.

7. Agencement selon la revendication 5, caractérisé en ce que des éléments redresseurs (13) sont disposés près du gicleur (9).

8. Agencement selon la revendication 5, caractérisé en ce que l'injecteur (8) de carburant et le tube (10) sont disposés asymétriquement.

9. Agencement selon la revendication 1, caractérisé en ce que le canal (14) d'écoulement contient, au voisinage de son orifice (17) d'entrée, un régulateur (18) de flux.

10. Agencement selon la revendication 1, caractérisé en ce que le canal (14) d'écoulement contient, au voisinage de son orifice (19) de sortie, une grille (20) de protection.

11. Agencement selon la revendication 1, caractérisé en ce que le canal (14) d'écoulement a la conformation d'un tube de Venturi, dans la partie la plus étroite duquel le poste (15) de mesure est disposé.

12. Agencement selon la revendication 1, caractérisé en ce qu'un capteur thermique (15) est disposé au poste de mesure.

13. Agencement selon la revendication 12, caractérisé en ce qu'un circuit électrique (16), associé au capteur (15), est disposé sur la cloison (7) au voisinage du poste (14) de mesure.

14. Agencement selon la revendication 13, caractérisé en ce que le circuit électrique (16) est en liaison thermoconductrice avec la cloison (7).

15. Agencement selon la revendication 13, caractérisé en ce que d'autres circuits électriques (22) sont disposés sur la cloison (7).

FIG.1

FIG.2